(19) Europäisches Patentamt
European Patent Office
Office européen des brevets

(11) Veröffentlichungsnummer : **0 097 299**
**B1**

(12) **EUROPÄISCHE PATENTSCHRIFT**

(45) Veröffentlichungstag der Patentschrift : **16.04.86**

(21) Anmeldenummer : **83105767.4**

(22) Anmeldetag : **13.06.83**

(51) Int. Cl.⁴ : **C 07 C 85/20**, C 08 G 18/10, C 08 G 18/83, C 08 G 18/50, C 08 G 18/40, C 08 G 18/22

(54) **Polyamine, Verfahren zur Herstellung von Polyaminen und deren Verwendung zur Herstellung von Polyurethanen.**

(30) Priorität : **23.06.82 DE 3223400**

(43) Veröffentlichungstag der Anmeldung : **04.01.84 Patentblatt 84/01**

(45) Bekanntmachung des Hinweises auf die Patenterteilung : **16.04.86 Patentblatt 86/16**

(84) Benannte Vertragsstaaten : **BE DE FR GB IT**

(56) Entgegenhaltungen : **J. Prakt. Chemie, 130, 314f und 332f (1931)**

(73) Patentinhaber : **BAYER AG**
**Konzernverwaltung RP Patentabteilung**
**D-5090 Leverkusen 1 Bayerwerk (DE)**

(72) Erfinder : **Fauss, Rudolf, Dr.**
**Gerstenkamp 10**
**D-5000 Köln 80 (DE)**
Erfinder : **Meiners, Hans Joachim, Dr.**
**Ringstrasse 25**
**D-5090 Leverkusen 17 (DE)**
Erfinder : **Rasshofer, Werner, Dr.**
**Wolfskaul 10**
**D-5000 Köln 80 (DE)**
Erfinder : **Meyborg, Holger, Dr.**
**Bergisch-Gladbacher Strasse 1**
**D-5068 Odenthal (DE)**

**EP 0 097 299 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein vereinfachtes Verfahren zur Herstellung von Polyaminen mit aromatisch gebundenen primären Aminogruppen durch Hydrolyse von endständige aromatische Isocyanatgruppen aufweisenden Verbindungen mit einem NCO-Gehalt von 0,5 bis 40 Gew.-%, in einem Einstufenverfahren in Gegenwart von tertiären Aminen und gegebenenfalls wasserlöslichen Ethern und gegebenenfalls von Cokatalysatoren. Als Isocyanatgruppen aufweisende Verbindungen werden modifizierte Isocyanate oder NCO-Prepolymere bzw. Semiprepolymere eingesetzt. Die Erfindung betrifft ferner solcherart hergestellte Polyamine und ihre Verwendung als Ausgangskomponenten bei der Herstellung von Polyurethanen.

Es ist bekannt, daß aromatische Isocyanate durch saure Hydrolyse in primäre aromatische Amine überführt werden können. Die Reaktion verläuft allerdings nur sehr unvollständig, da das bei der Hydrolyse gebildete Amin mit noch nicht umgesetztem Isocyanat zum entsprechenden Harnstoff weiterreagiert. Diese Folgereaktion läßt sich auch durch Anwendung überschüssiger starker Mineralsäure nicht unterdrücken. Ein neueres Beispiel dieser Verfahrensweise findet sich in der JP-PS 49 095-908.

In der DE-B 1 270 046 wird ein Verfahren zur Herstellung definierter, Polyalkylenglykolether-Segmente enthaltender, primärer aromatischer Amine beschrieben, bei dem man Umsetzungsprodukte von aromatischen Di- oder Triisocyanaten mit Polyalkylenglykolethern und/oder Polyalkylenglykolthioethern, vorzugsweise solchen mit Molekulargewichten zwischen 400 und 4 000, mit sekundären oder tertiären Carbinolen umsetzt und anschließend (gegebenenfalls in Gegenwart saurer Katalysatoren) in einem inerten Lösungsmittel einer thermischen Spaltung bei hohen Temperaturen unterwirft. Nachteilig ist dabei neben der hohen Spalttemperatur, daß im Verlauf der thermischen Spaltung der Urethane brennbare, leicht flüchtige Alkene entstehen, die im Gemisch mit Luft explosiv sind, so daß entsprechende Vorsichtsmaßnahmen getroffen werden müssen.

Gegenstand der DE-B 1 694 152 ist die Herstellung von mindestens 2 endständige Aminogruppen aufweisenden Prepolymeren durch Umsetzung von Hydrazin, Aminophenylethylamin oder anderen Diaminen mit einem NCO-Prepolymer aus einem Polyetherpolyol und Polyisocyanat (NCO : NH-Verhältnis = 1 : 1,5 bis 1 : 5). Nicht umgesetztes Amin muß dabei in einem weiteren Schritt sorgfältig entfernt werden, da es die Umsetzung mit Polyisocyanaten stark katalysiert, so zu kurzen Verarbeitungszeiten führt und auch selbst als Reaktionspartner auftritt.

Eine andere Synthesemöglichkeit für Urethangruppen aufweisende Polyamine wird in der FR-PS 1 415 317 beschrieben. Urethangruppenhaltige NCO-Prepolymere werden mit Ameisensäure in die N-Formylderivate überführt, die zu endständigen aromatischen Aminen verseift werden. Auch die Reaktion von NCO-Prepolymeren mit Sulfaminsäure gemäß DE-B 1 155 907 führt zu Verbindungen mit endständigen Aminogruppen. Desweiteren werden höhermolekulare, aliphatische, sekundäre und primäre Aminogruppen aufweisende Voraddukte nach DE-B 1 215 373 durch Umsetzung höhermolekularer Hydroxylverbindungen mit Ammoniak in Gegenwart von Katalysatoren unter Druck bei hohen Temperaturen erhalten oder gemäß US-PS 3 044 989 durch Umsetzung höhermolekularer Polyhydroxylverbindungen mit Acrylnitril unter anschließender katalytischer Hydrierung zugänglich. Auch durch Umsetzung von NCO-Prepolymeren mit Hydroxylgruppen aufweisenden Enaminen, Aldiminen oder Ketiminen und anschließende Hydrolyse erhält man gemäß DE-A 2 546 536 bzw. US-PS 3 865 791 höhermolekulare, endständige Aminogruppen und Urethangruppen aufweisende Verbindungen. Eine weitere Synthesemöglichkeit für Urethan- und Ethergruppen aufweisende aromatische Polyamine liegt in der bei der Reaktion von Isatosäureanhydrid und Diolen eintretenden Ringöffnung. Solche Polyamine sind z. B. beschrieben in der US-PS 4 180 644 und der DE-A 2 019 432, 2 619 840, 2 648 774 und 2 648 825. Nachteilig für viele Zwecke ist die geringe Reaktivität der solcherart erhaltenen, aromatischen Esteramine.

Auch die Reaktion von Nitroarylisocyanaten mit Polyolen und nachfolgender Reduktion der Nitrogruppen zu aromatischen Amingruppen ist bekannt (US-PS 2 888 439).

Nachteilig sind hier vor allem die hohen Kosten des Reduktionsschrittes.

Es ist auch bekannt, daß gewisse heteroaromatische Isocyansäureester durch basische Hydrolyse in heteroaromatische Amine überführt werden können. Die bei H. John, J. Prakt. Chemie *130*, 314 f bzw. 332 f (1931) für zwei ganz bestimmte, heteroaromatische Monoisocyansäureester genannten Hydrolysebedingungen sind aber für die Überführung von Poly-NCO-Verbindungen in aliphatische und/oder aromatische Amine nicht nur völlig ungeeignet, sondern darüber hinaus auch gefährlich.

Gegenstand eigener Vorschläge nach den Deutschen Offenlegungsschriften 29 48 419 und P 30 39 600 sind mehrstufige Verfahren zur Herstellung von Polyaminen durch alkalische Hydrolyse von NCO-Voraddukten mittels überschüssiger Basenmengen (Alkalihydroxide) zu Carbamaten, Ansäuern mittels äquivalenter oder über die Basenmenge hinaus überschüssiger Mengen an Mineralsäuren oder Ionenaustauscherharzen unter Carbamatzersetzung, gegebenenfalls Neutralisation überschüssiger Säuremengen mittels Basen und anschließende Isolierung der Polyamine.

Die hier beschriebenen Verfahren zur Herstellung von Polyaminen sind alle aufwendig. Selbst bei dem zuletztgenannten, bereits einfacheren Verfahren zur Umwandlung von Polyisocyanaten zur Polyaminen wäre noch eine weitere entscheidende Vereinfachung wünschenswert, um zu Polyaminen in wirtschaftlich vertretbarer Weise zu gelangen. Ein wesentlicher Vorteil wäre dabei in einem Einstufenverfahren gegenüber den bisherigen Mehrstufenverfahren zu sehen.

Bisher blieben alle Versuche erfolglos, in befriedigenden Ausbeuten Polyamine durch direkte Verseifung von Polyisocyanaten in einem Einstufenverfahren zu erhalten. Statt der gewünschten Verseifungsprodukte werden nur Harnstoffgruppen aufweisende, kaum mehr fließfähige, teilweise inhomogene Produkte erhalten, welche entweder gar keine oder nur äußerst wenig Aminogruppen einem Molekulargewicht von 400 bis 12 000, z. B. Mischungen von verschiedenen Polyethern, eingesetzt werden.

Für die Herstellung des im erfindungsgemäßen Verfahren einzusetzenden NCO-Prepolymeren kommen, gegebenenfalls nur anteilweise, als Ausgangskomponenten auch Verbindungen mit mindestens zwei gegenüber Isocyanaten reaktionsfähigen Wasserstoffatomen und einem Molekulargewicht von 18 bis 399, vorzugsweise 62 bis 399, in Betracht. Auch in diesem Fall versteht man hierunter Wasser und/oder Hydroxylgruppen und/oder Aminogruppen und/oder Thiolgruppen, vorzugsweise Hydroxylgruppen aufweisende Verbindungen, wie sie als Kettenverlängerungsmittel oder Vernetzungsmittel aus der Polyurethanchemie an sich bekannt sind. Diese Verbindungen weisen in der Regel 2 bis 8, vorzugsweise 2 bis 4, gegenüber Isocyanaten reaktionsfähige Wasserstoffatome auf.

Auch in diesem Fall können Mischungen von verschiedenen Verbindungen mit mindestens zwei gegenüber Isocyanaten reaktionsfähigen Wasserstoffatomen mit einem Molekulargewicht von 62 bis 399 verwendet werden.

Als Beispiele für derartige Verbindungen seien genannt : Wasser, Ethylenglykol, Propandiol-(1,2) und -(1,3), Butandiol-(1,4) und -(2,3), Pentandiol-(1,5), Hexandiol-(1,6), Octandiol-(1,8), Neopentylglykol, 1,4-Bishydroxymethyl-cyclohexan, 2-Methyl-1,3-propandiol, Dibrombutendiol, Glyzerin, Trimethylolpropan, Hexantriol-(1,2,6), Trimethylolethan, Pentaerythrit, Chinit, Mannit und Sorbit, Dianhydrosorbit und Dianhydromannit, Ricinusöl, Di-, Tri- und Tetraethylenglykol, Di-, Tri- und Tetrapropylenglykol, Dibutylenglykol und höhere Polyethylen-, Polypropylen- oder Polybutylenglykole mit einem Molekulargewicht bis 399, 4,4'-Dihydroxy-diphenylpropan, Di-hydroxy ethyl-hydrochinon, Ethanolamin, Diethanolamin, N-Methyldiethanolamin, Triethanolamin und 3-Aminopropanol.

Als niedermolekulare Polyole kommen auch die Gemische von Hydroxyaldehyden und Hydroxyketonen (« Formose ») bzw. Die hieraus durch Reduktion erhaltenen mehrwertigen Alkohole (« Formit ») in Frage, wie sie bei der Selbstkondensation von Formaldehydhydrat entstehen (DE-A 2 639 084, 2 714 084).

Erfindungsgemäß geeignete aliphatische Diamine sind beispielsweise Ethylendiamin, 1,4-Tetramethylendiamin, 1,6-Hexamethylendiamin, 1,12-Dodecamethylendiamin sowie deren Gemische, 1-Amino-3,3,5-trimethyl-5-amino-methylcyclohexan (« Isophorondiamin »), 2,4- und 2,6-Hexahydrotoluylendiamin sowie deren Gemische, Perhydro-2,4'- und -4,4'-diaminodiphenylmethan, p-Xylylendiamin, Bis-(3-aminopropyl)-methylamin, Diaminoperhydroanthrazene (DE-A 2 638 731) und cycloaliphatische Triamine gemäß DE-A 2 614 244. Auch Hydrazin und substituierte Hydrazine, z. B. Methylhydrazin oder Dihydrazidverbindungen, kommen erfindungsgemäß in Betracht.

Als Beispiele für aromatische Diamine seien die Ethergruppen aufweisenden Diamine gemäß DE-A 1 770 525 und 1 809 172 (US-PS'en 3 654 364 und 3 736 295), gegebenenfalls in 5-Stellung substituierte 2-Halogen-1,3-phenylendiamine (DE-A 2 001 772, 2 025 896 und 2 065 869), 3,3'-Dichlor-4,4'-diaminodiphenylmethan, Toluylendiamin, 4,4'-Diaminodiphenylmethan, 4,4'-Diaminodiphenyldisulfide (DE-A 2 404 976), Diaminodiphenyldithioether (DE-A 2 509 404), durch Alkylthiogruppen substituierte aromatische Diamine (DE-A 2 638 760), Sulfonat- oder Carboxylatgruppen enthaltende aromatische Diamine (DE-A 2 720 166) sowie die in der DE-A 2 635 400 aufgeführten hochschmelzenden Diamine genannt. Beispiele für aliphatisch-aromatische Diamine sind die Aminoalkylthioaniline gemäß DE-A 2 734 574.

Zur Herstellung der im erfindungsgemäßen Verfahren einsetztbaren NCO-Verbindungen ebenfalls, wenn auch weniger bevorzugt, verwendbare Verbindungen sind organofunktionelle Polysiloxane, die zwei endständige, gegenüber Isocyanatgruppen reaktionsfähige Gruppen und Struktureinheiten der Formel $—O—Si(R)_2—$ aufweisen, wobei in dieser Formel R für einen $C_1$-$C_4$-Alkyl- oder einen Phenylrest, vorzugsweise jedoch für einen Methylrest, steht. Erfindungsgemäß eignen sich als Ausgangsmaterialien sowohl die an sich bekannten, endständige organofunktionelle Gruppen aufweisenden reinen Polysiloxane als auch die an sich bekannten endständig organofunktionellen Siloxanpolyoxyalkylencopolymeren.

Die erfindungsgemäß besonders bevorzugten Organopolysiloxane entsprechen der allgemeinen Formel

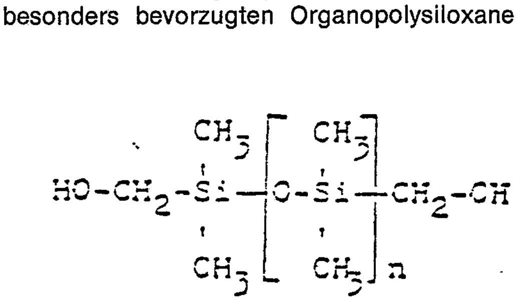

n = 5 bis 29

Sie werden in an sich bekannter Weise durch Äquilibrierung von 1,1,3,3-Tetramethyl-1,3-hydroxymethyldisiloxan der Formel

besonders bevorzugt 0,58 bis 4,1 Gew.-% an aromatisch gebundenen primären Aminogruppen, hergestellt nach dem oben angegebenen Verfahren.

Gegenstand der Erfindung ist ferner die Verwendung der Polyamine mit aromatisch gebundenen, primären $NH_2$-Gruppen zur Herstellung von Polyurethanen sowie gegebenenfalls zellförmigen Polyurethankunststoffen und Polyurethanschaumstoffen, durch Umsetzung von

A) Polyisocyanaten und/oder blockierten Polyisocyanaten, mit

B) Polyaminen, sowie gegebenenfalls

C) weiteren, niedermolekularen und/oder höhermolekularen Verbindungen mit gegenüber Isocyanaten reaktiven Gruppen, gegebenenfalls

D) in Anwesenheit an sich bekannter Hilfs- und Zusatzstoffe und/oder Lösungsmittel

dadurch gekennzeichnet, daß als Komponente B) die nach dem erfindungsgemäßen Verfahren hergestellten Polyamine eingesetzt werden.

Die zwei oder mehrere, aromatische, freie NCO-Gruppen aufweisenden, im erfindungsgemäßen Verfahren einsetzbaren NCO-Verbindungen a), im folgenden auch kurz « NCO-Verbindungen » genannt, stellen entweder modifizierte, aromatische Polyisocyanate dar, wie sie durch teilweise Umwandlung der Isocyanatgruppen in Urethan-, Harnstoff-, Biuret-, oder Uretdion- oder Isocyanuratgruppen entstehen, oder sind sogenannte NCO-Prepolymere aus gegenüber NCO-Gruppen reaktiven H-Gruppen tragenden, mehrwertigen Verbindungen des Molekulargewichts 62 bis 12 000 und (überschüssigen) Mengen an aromatischen Polyisocyanaten oder sind gegebenenfalls Semiprepolymere aus NCO-Prepolymeren und zusätzlichen niedermolekularen Polyisocyanaten.

Als modifizierte aromatische Polyisocyanate sind beispielsweise geeignet:

Urethangruppen aufweisende Polyisocyanate (Polyol-modifiziert), Harnstoffgruppen aufweisende Polyisocyanate (Wassermodifizierung, DE-PS 1 230 778), Biuretgruppen aufweisende Polyisocyanate (US-PS 3 124 605, 3 201 372, GB-PS 889 050), Isocyanuratgruppen aufweisende Polyisocyanate (DE-PS'en 1 022 789 und 1 222 067) sowie Uretdiongruppen enthaltende, dimere oder oligomere Polyisocyanate sind bekannte Verbindungen oder nach bekannten Verfahren zugänglich. Eine Reihe solcher Uretdionpolyisocyanate ist in Analytical Chemistry of the Polyurethanes, Band 16/III, High-Polymers-Series (Wiley 1969) aufgeführt.

Solche modifizierten Polyisocyanate mit Urethan- und/oder Harnstoff- und/oder Biuret- und/oder Uretdion- und/oder Isocyanuratgruppen, wie sie im erfindungsgemäßen Verfahren einsetzbar sind, haben üblicherweise einen NCO-Gehalt von 5 bis 40 Gew.-%, bevorzugt 10 bis 25 Gew.-% und sind im wesentlichen frei von Urethangruppen.

Die im erfindungsgemäßen Verfahren eingesetzten NCO-Verbindungen a) sind besonders jedoch NCO-Prepolymere, wie sie in an sich bekannter Weise durch Umsetzung von niedermolekularen und/oder höhermolekularen Hydroxy- und/oder Amino- und/oder Thiolgruppen als reaktive Gruppen enthaltenden Verbindungen (Molekulargewicht 62 bis ca. 12 000) mit einem Überschuß an aromatischen Polyisocyanaten entstehen.

Als aromatische Polyisocyanate zur Herstellung der freie NCO-Gruppen aufweisenden Verbindungen kommen im Prinzip beliebige, von leicht hydrolysierbaren Gruppen, abgesehen von den NCO-Gruppen, im wesentlichen freie, aromatische und heterocyclische Polyisocyanate, wie sie z. B. von W. Siefken in Justus Liebigs Annalen der Chemie, 562, S. 75-136, beschrieben werden, beispielsweise solche der Formel Q $(NCO)_n$, in der n 2 bis 4, vorzugsweise 2 und Q einen Kohlenwasserstoffrest mit 4 bis 15, einen aromatischen Kohlenwasserstoffrest mit 6 bis 15, vorzugsweise 6 bis 13 C-Atomen, bedeuten, z. B. 1,3- und 1,4-Phenylendiisocyanat, 2,4- und 2,6-Toluylendiisocyanat, sowie beliebige Gemische dieser Isomeren, Diphenylmethan-2,4'- und/oder -4,4'- und/oder 2,2'-diisocyanate, einschließlich der Alkyl- und Chlor-substituierten Derivate und Naphthylen-1,5-diisocyanat. Geeignete Diisocyanate sind auch die in DE-A 2 922 966 beschriebenen 2,4'-Diisocyanatodiphenylsulfide und die in z. B. EP 24 665 und DE-A 2 935 318 beschriebenen alkylsubstituierten Diphenylmethandiisocyanate.

Ferner kommen beispielsweise in Frage: Triphenylmethan-4,4',4"-triisocyanat, Polyphenyl-polymethylen-polyisocyanate, wie sie durch Anilin-Formaldehyd-Kondensation und anschließende Phosgenierung erhalten und z. B. in den GB-PS'en 874 430 und 848 671 beschrieben werden, m- und p-Isocyanatophenylsulfonyl-isocyanate gemäß der US-PS 3 454 606, perchlorierte Arylpolyisocyanate, wie sie z. B. in der DE-Auslegeschrift 1 157 601 (US-PS 3 277 138) beschrieben werden, Isocyanuratgruppen aufweisende Polyisocyanate, wie sie z. B. in der US-PS 3 001 973, in den DE-PS'en 1 022 789, 1 222 067 und 1 027 394 sowie in den DE-PS'en 1 929 034 und 2 004 048 beschrieben werden, Urethangruppen aufweisende Polyisocyanate, wie sie z. B. in der BE-PS 752 261 oder in den US-PS'en 3 394 164 und 3 644 457 beschrieben werden, acylierte Harnstoffgruppen aufweisende Polyisocyanate gemäß der DE-PS 1 230 778 sowie durch Telomerisationsreaktionen hergestellte Polyisocyanate, wie sie z. B. in der US-PS 3 654 196 beschrieben werden. Ferner sind Diarylalkylendiisocyanate, welche durch Polymerisation von Acrylnitril und gegebenenfalls weiteren ethylenisch ungesättigten Monomeren in den Diarylalkylendiisocyanaten nach dem Verfahren der EP-A 37 112 (US-PS 4 283 500) erhalten werden, einsetzbar.

Bevorzugt werden in der Regel die technisch leicht zugänglichen Polyisocyanate, z. B. das 2,4- und 2,6-Toluylendiisocyanat sowie beliebige Gemische dieser Isomeren (« TDI »), Polyphenyl-polymethylen-polyisocyanate, wie sie durch Anilin-Formaldehyd-Kondensation und anschließende Phosgenierung hergestellt werden (« rohes MDI »), sowie Urethangruppen, Isocyanuratgruppen oder Harnstoffgruppen

aufweisende Polyisocyanate (« modifizierte Polyisocyanate »). Besonders bevorzugt werden die modifizierten Polyisocyanate, die sich vom 2,4- und/oder 2,6-Toluylendiisocyanat (TDI) bzw. vom 4,4'- und/oder 2,4'- und/oder 2,2'-Diphenylmethandiisocyanat (MDI) ableiten. Technisch ist die Verwendung von TDI und MDI (oder ihren Isomergemischen) zur NCO-Prepolymerherstellung am bedeutsamsten.

Für die Herstellung der NCO-Prepolymeren werden vorzugsweise höhermolekulare Verbindungen mit einem Molekulargewicht von 400 bis 12 000, insbesondere 400 bis 6 000, eingesetzt, welche mindestens 1,9, vorzugsweise 2 bis 4, insbesondere 2 bis 3, reaktive Hydroxyl-, Amino- und/oder Thiolgruppen (bevorzugt Hydroxylgruppen) als reaktive Gruppen pro Mol aufweisen. In Frage kommen beispielsweise die in der Polyurethanchemie üblichen, gegenüber Isocyanaten reaktive Gruppen tragenden Polyacetale, Polythioether, Polycarbonate, Polyamide, Polysiloxane und/oder Polybutadiene, besonders Polyester, Polylactone sowie Polyether; insbesondere aber Hydroxylgruppen tragende Polyether.

Die erfindungsgemäß bevorzugten, mindestens zwei, in der Regel zwei bis acht, vorzugsweise zwei bis drei, Hydroxylgruppen aufweisenden Polyether sind solche der an sich bekannten Art und werden z. B. durch Polymerisation von Epoxiden wie Ethylenoxid, Propylenoxid, Butylenoxid, Tetrahydrofuran, Styroloxid oder Epichlorhydrin mit sich selbst, z. B. in Gegenwart von Lewis-Katalysatoren wie $BF_3$, oder durch Anlagerung dieser Epoxide, vorzugsweise von Ethylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z. B. Ethylenglykol, Propandiol-(1,3) oder -(1,2), Trimethylolpropan, Glycerin, Sorbit, 4,4'-Dihydroxy-diphenylpropan, Anilin, Ethanolamin oder Ethylendiamin hergestellt. Auch Sucrosepolyether sowie auf Formit oder Formose gestartete Polyether kommen erfindungsgemäß in Frage. Vielfach sind solche Polyether bevorzugt, die überwiegend (bis zu 90 Gew.-%, bezogen auf alle vorhandenen OH-Gruppen im Polyether) primäre OH-Gruppen aufweisen.

Auch OH-, NH- und/oder SH-Gruppen aufweisende Polybutadiene sind erfindungsgemäß geeignet (s. Progress Org. Coatings, Band 7 (3), 289-329 (1979)).

Als Polyacetale kommen z. B. die aus Glykolen, wie Di- oder Tri-ethylenglykol, 4,4'-Dihydroxyethoxydiphenylmethan, Hexandiol und Formaldehyd oder durch Polymerisation cyclischer Acetale, wie z. B. Trioxan, herstellbare Verbindungen in Frage.

Als Hydroxylgruppen aufweisende Polycarbonate kommen solcher der an sich bekannten Art in Betracht, die z. B. durch Umsetzung von Diolen wie Propandiol-1,3, Butandiol-1,4 und/oder Hexandiol-1,6, Di-, Tri- oder Tetra-ethylenglykol oder Thiodiglykol mit Diarylcarbonaten, z. B. Diphenylcarbonat, oder Phosgen hergestellt werden können (DE-B 1 694 080, 1 915 908 und 2 221 751; DE-A 2 605 024).

Als Polyester aus Dicarbonsäuren und Diolen kommen vorzugsweise solche aus Adipinsäure- und Isophthalsäure und geradkettigen und/oder verzweigten Diolen in Betracht, ebenso Lactonpolyester, vorzugsweise auf Basis von Caprolacton und Starterdiolen.

Unter den Polythioethern seien insbesondere die Kondensationsprodukte von Thiodiglykol mit sich selbst und/oder mit anderen Glykolen angeführt.

Auch bereits Urethan- oder Harnstoffgruppen enthaltende Polyhydroxylverbindungen sowie gegebenenfalls modifizierte natürliche Polyole sind verwendbar. Auch Anlagerungsprodukte von Alkylenoxiden an Phenol-Formaldehyd-Harze oder auch an Harnstoff-Formaldehyd-Harze sind erfindungsgemäß einsetzbar. Es ist auch möglich, z. B. gemäß DE-A 2 559 372, in die Polyhydroxylverbindungen Amidgruppen einzuführen.

Erfindungsgemäß können gegebenenfalls auch Polyhydroxylverbindungen eingesetzt werden, in welchen hochmolekulare Polyaddukte bzw. Polykondensate oder Polymerisate in feindisperser oder gelöster Form enthalten sind. Derartige Polyhydroxylverbindungen werden z. B. erhalten, wenn man Polyadditionsreaktionen (z. B. Umsetzungen zwischen Polyisocyanaten und aminofunktionellen Verbindungen) bzw. Polykondensationsreaktionen (z. B. zwischen Formaldehyd und Phenolen und/oder Aminen) in situ in den o. g., Hydroxylgruppen aufweisenden Verbindungen ablaufen läßt. Derartige Verfahren sind beispielsweise in den DE-B 1 168 075 und 1 260 142, sowie den DE-A 2 324 134, 2 423 984, 2 512 385, 2 513 815, 2 550 796, 2 550 797, 2 550 833, 2 55 862, 2 633 293 und 2 639 254 beschrieben. Es ist aber auch möglich, gemäß US-PS 3 869 413 bzw. 2 550 860 eine fertige wäßrige Polymerdispersion mit einer Polyhydroxylverbindung zu vermischen und anschließend aus dem Gemisch das Wasser zu entfernen.

Auch durch Vinylpolymerisate modifizierte Polyhydroxylverbindungen, wie sie z. B. durch Polymerisation von Styrol und Acrylnitril in Gegenwart von Polyethern (US-PS 3 383 351, 3 304 273, 3 523 093, 3 110 695; DE-B 1 152 536) oder Polycarbonatpolyolen (DE-PS 1 769 795; US-PS 3 637 909) erhalten werden, sind für das erfindungsgemäße Verfahren geeignet. Bei Verwendung von Polyetherpolyolen, welche gemäß DE-A 2 442 101, 2 644 922 und 2 646 141 durch Pfropfpolymerisation mit Vinylphosphonsäureestern sowie gegebenenfalls (Meth)acrylnitril, (Meth)acrylamid oder OH-funktionellen (Meth)acrylsäureestern modifiziert wurden, erhält man Kunststoffe vonbesonderer Flammwidrigkeit.

Beim Einsatz von modifizierten Polyhydroxylverbindungen der o. g. Art als Ausgangsmaterialien für die Polyamine entstehen Ausgangskomponenten, die im Polyisocyanat-Polyadditionsverfahren in vielen Fällen Polyurethankunststoffe mit wesentlich verbesserten mechanischen Eigenschaften ergeben.

Vertreter der genannten erfindungsgemäß zu verwendenden Verbindungen sind z. B. in High Polymers, Vol. XVI, « Polyurethanes, Chemistry and Technology », verfaßt von Saunders-Frisch, Inter-Methyl-N'-dimethylaminoethyl-piperazin, N,N'-bis-dimethylaminoethyl-piperazin, N,N'-Bis-dimethylaminopropylpiperazin und andere, in der DE-A 2 636 787 zitierte Bis-dialkylaminoalkyl-piperazine.

Bevorzugt aus dieser Gruppe sind die wasserlöslichen Verbindungen wie Tetramethylethylendiamin, permethyliertes Diethylentriamin, N-Methylmorpholin, Bis-2-dimethylaminoethyl-ether und N-Methylpiperidin.

Einsetzen lassen sich auch acylierte tertiäre Aminderivate, wie z. B. 1-Dimethylamino-3-formylaminopropan, N-(2-Dimethylaminoethyl)-propionamid, N-(2-Diethylaminoethyl)-benzamid, sowie andere Amidgruppen (vorzugsweise Formamidgruppen) enthaltende tertiäre Amine gemäß DE-A 2 523 633 und 2 732 292.

Von relativ geringer Wirksamkeit sind tertiäre Amine vom Pyridintyp und tertiäre Amine mit mindestens einem, an das N-Atom gebundenem aromatischem Rest, z. B. Dimethylanilin.

Insoweit es sich nicht um wasserlösliche tertiäre Amine handelt, soll ihr Siedepunkt zweckmäßig unter 250 °C, bevorzugt unter 200 °C, liegen.

Wenn nicht vollständig in der Reaktionsmischung homogen lösliche (nur bedingt wasserlösliche) tert.-Amine vorliegen, werden gegebenenfalls die Hilfslösungsmittel d) zur Homogenisierung der Reaktionsmischung mitverwendet.

In dem erfindungsgemäßen Verfahren stellen somit die tertiären Amine c) nicht nur Katalysatoren der Hydrolysereaktion dar, sondern darüber hinaus bei Anwendung in hoher Menge auch « Lösungsmittel » zur (weitgehenden) Homogenisierung der Reaktionsmischung.

Im erfindungsgemäßen Verfahren werden die NCO-Verbindungen a) in der Regel ohne Lösungsmittel d) verwendet. Es können zur Viskositätserniedrigung aber auch Lösungen von NCO-Verbindungen in NCO-inerten Lösungsmitteln, z. B. waserlöslichen Etherverbindungen, z. B. Dioxan, gegebenenfalls sogar in Gegenwart kleinerer Mengen an teil- oder wasserunlöslichen Verbindungen wie Methylethylketon, Propionitril oder Kohlenwasserstoffen oder Halogenkohlenwasserstoffen eingesetzt werden. Ferner können in der angegebenen beschränkten Menge auch Verbindungen wie z. B. Dimethylformamid mit eingesetzt werden. Bei der Hydrolyse-Reaktion sollen im wesentlichen homogene Lösungen vorliegen.

Bevorzugt werden die NCO-Verbindungen jedoch dann als Lösungen in den o. g. Lösungsmitteln verwendet, wenn es sich um feste oder im Bereich von 20 bis 100 °C unschmelzbare, schwer schmelzbare oder zähflüssige NCO-Prepolymere handelt. Werden flüssige NCO-Verbindungen ohne Lösungsmittel im erfindungsgemäßen Verfahren eingesetzt, sollen sie vorteilhafterweise auf von 20 bis 100 °C, bevorzugt von 40 bis 90 °C erwärmt werden, um ihre Viskosität niedrig zu halten. Bei Verwendung von Lösungsmitteln, die bei Normaldruck tiefer sieden als es der Reaktionstemperatur entspricht, muß unter Druck gearbeitet werden.

Als wasserlösliche, wassermischbare Lösungsmittel auf Etherbasis d) werden vorzugsweise Dioxan und Tetrahydrofuran eingesetzt. Es können jedoch auch die Ether des Ethylenglykols oder Propylenglykols verwendet werden.

Die Etherlösungsmittel können in untergeordneten Mengen auch mit wassermischbaren « Co-Lösungsmitteln » (d/1) mit Carbonsäuredialkylamid-, Lactam-, Tetraalkylharnstoff-, Sulfon-, Sulfoxid-, Phosphordialkylamid-, Nitril- und Ketongruppen mit einem Siedebereich von 56 bis 250 °C, vorzugsweise 80 bis 200 °C, und einer Dielektrizitätskonstante von mindestens 10 verdünnt werden. Die eingesetzten Mengen von d/1 liegen bei weniger als 5 Teilen pro 100 Teilen a).

Die geeigneten Lösungsmittel d/1 lassen sich zu folgenden Substanzklassen zusammenfassen :

1. Wasserlösliche, aliphatische oder cycloaliphatische Säureamide mit 1 bis 10 Kohlenstoffatomen, z. B. Dimethylformamid, Diethylformamid, N-Methylpyrrolidon, Dimethylacetamid, Caprolactam, Formamid. Bevorzugt sind Dimethylformamid, Dimethylacetamid und N-Methylpyrrolidon.
2. Wasserlösliche, tetraalkylierte aliphatische Harnstoffe mit 4 bis 12 C-Atomen, z. B. Tetramethylharnstoffe oder Tetraethylharnstoff.
3. Wasserlösliche, aliphatische oder cycloaliphatische Sulfone oder Sulfoxide mit 2 bis 10 Kohlenstoffatomen, z. B. Tetramethylensulfon oder Dimethylsulfoxid.
4. Wasserlösliche, aliphatische oder cycloaliphatische Phosphorsäureamide, z. B. Hexamethylphosphorsäuretriamid.
5. Das wasserlösliche Acetonitril.
6. Das wasserlösliche Keton : Aceton.

Die CO-Lösungsmittel können auch in beliebigen Mischungsverhältnissen zueinander eingesetzt werden. Unter den genannten Lösungsmitteln werden solche bevorzugt, welche bei Normaldruck zwischen 56 und 250 °C sieden, da sich hierbei ihre Aufarbeitung vereinfacht.

Bevorzugte wassermischbare Lösungsmittel sind Dimethylformamid, Dimethylacetamid und N-Methyl-pyrrolidon, Tetramethylensulfon, Acetonitril und Aceton. Technisch ganz besonders geeignet und zugänglich sind Dimethylformamid und Acetonitril. Weniger bevorzugt sind die Zerewitinoff-aktiven Substanzen, wie z. B. Caprolactam oder Formamid, oder gegenüber Aminogruppen nicht völlig unreaktive Substanzen wie z. B. Aceton, obwohl auch durchaus noch akzeptable Produkte erhalten werden.

Eine Mitverwendung von nicht vollständig mit Wasser mischbaren Lösungsmitteln, z. B. Propionitril, Methylethyketon, Ethylacetat oder Kohlenwasserstoffen ist in untergeordneten Mengen möglich, aber nicht bevorzugt.

```
          CH3   CH3
           |     |
HO-H2C-Si-O-Si-CH2-OH
           |     |
          CH3   CH3
```

mit Octamethylcyclotetrasiloxan in Gegenwart von Schwefelsäure bzw. nach dem Verfahren der DE-B 1 236 505 hergestellt.

Die freie aromatisch gebundene Isocyanatgruppen aufweisenden NCO-Prepolymeren werden in an sich bekannter Weise durch Umsetzung der Reaktionspartner in der Schmelze oder in Lösung hergestellt. Das Äquivalentverhältnis von NCO-Gruppen zu aktiven Wasserstoffatomen (bevorzugt OH-Gruppen) ist in jedem Fall größer als 1, soll in der Regel zwischen 1,5 : 1 und 2,8 : 1 liegen. Selbstverständlich ist es möglich, einen noch größeren Überschuß an Polyisocyanat zu verwenden. Die NCO-Prepolymeren (« NCO-Voraddukte ») haben je nach den gewählten Ausgangskomponenten im allgemeinen ölige bis wachsartige Konsistenz. Beträgt das NCO/OH-Verhältnis mehr als 2, so erhält man im wesentlichen nicht verlängerte NCO-Voraddukte, während NCO-OH-Verhältnisse von unter 2 eine Erhöhung des mittleren Molekulargewichts der NCO-Voraddukte zur Folge haben. Es ist, wie schon erläutert, auch möglich, niedermolekulare Polyole als Kettenverlängerungsmittel bei der Herstellung der NCO-Prepolymere anteilmäßig neben höhermolekularen Ausgangsverbindungen mitzuverwenden ; in diesem Fall erhält man ebenfalls höhermolekulare NCO-Voraddukte.

Werden die so erhaltenen NCO-Prepolymere noch einer Destillation — vorteilhaft unter Verwendung eines Dünnschichtverdampfers — unterworfen, wobei die monomeren Polyisocyanate entfernt werden, so werden im erfindungsgemäßen Verfahren Produkte mit einem sehr geringen bzw. praktisch ohne Gehalt an monomerem Polyamin erhalten.

Für das erfindungsgemäße Verfahren werden NCO-Prepolymere bevorzugt, die aus höhermolekularen Polyolen (Molmasse 400-12 000), vorzugsweise Polyetherpolyolen, gegebenenfalls unter Mitverwendung von Kettenverlängerungsmitteln der oben beschriebenen Art (Molmasse 62-399), durch Umsetzung mit aromatischen Diisocyanaten im Äquivalentverhältnis von 1 : 1,5 bis 1 : 2,8, insbesondere ca. 1 : 1,5 bis 1 : 2, erhalten worden sind.

Der NCO-Gehalt der eingesetzten NCO-Prepolymere beträgt 0,5 % bis 30 Gew.-%, bevorzugt 1,2 Gew.-% bis 25 Gew.-%, besonders bevorzugt 1,5 Gew.-% bis 10 Gew.-%.

Im erfindungsgemäßen Verfahren können jedoch auch sogenannte « Semiprepolymere », d. h. Mischungen von NCO-Prepolymeren mit weiteren freien Polyisocyanaten, eingesetzt werden, die einen u. U. noch höheren Gehalt, z. B. bis 40 Gew.-% NCO, aufweisen können. Aus praktisch/wirtschaftlichen Gründen ist dies jedoch in den meisten Fällen nicht sinnvoll, außerdem können die aus den monomeren Polyisocyanaten entstandenen monomeren Amine bei einer Reihe von Anwendungen stören.

Die freie NCO-Gruppen aufweisenden Verbindungen a) in Form ihrer (zumeist urethangruppenfreien) modifizierten Isocyanate bzw. in Form ihrer (urethangruppenhaltigen) NCO-Prepolymeren bzw. ihre « Semiprepolymeren » besitzen insgesamt einen Gehalt an NCO-Gruppen innerhalb von 0,5 bis 40 Gew.-%, bevorzugt 1,2 bis 25 Gew.-% und besonders bevorzugt von 1,5 bis 10 Gew.-% NCO.

Die Wassermenge b) beträgt mindestens das Doppelte derjenigen Wassermenge, welche sich aus dem stöchiometrischen Bedarf von 1 Mol Wasser pro Mol NCO-Gruppe bei der Hydrolyse der NCO-Verbindung a) errechnet. Bevorzugt wird die größer als 5-fache (besonders bevorzugt größer als 10-fache) stöchiometrische Wassermenge verwendet, zumeist liegt der Anteil Wasser oberhalb von 1 Teil pro 100 Teile NCO-Verbindung a).

Als tertiäre Amine c) werden vorzugsweise solche aliphatischer und/oder cycloaliphatischer Struktur eingesetzt, wobei auch Gemische verschiedener tertiärer Amine eingesetzt werden können. Dabei sollen mindestens zwei, vorzugsweise alle drei Reste des tertiären Amins aliphatische, cycloaliphatische oder araliphatische (mit Bindungen der aliphatischen Teile) Reste sein.

Beispiele sind z. B. meist nicht vollständige wasserlösliche Vertreter wie die Trialkylamine, z. B. Trimethylamin, Triethylamin, Tripropylamin, Triisopropylamin, Dimethyl-n-propylamin, Tri-n-butylamin, Tri-isobutylamin, Tri-isopentylamin, Dimethylbutylamin, Triamylamin, Trioctylhexylamin, Dodecyldimethylamin, Dimethylcyclohexylamin, Dibutylcyclohexylamin, Dicyclohexylethylamin, aber auch tertiäre Amine mit einer araliphatischen Gruppe wie Dimethyl-benzylamin, Diethylbenzylamin, α-Methylbenzyldimethylamin, Tetramethyl-1,3-butandiamin.

Bevorzugt sind Trialkylamine mit insgesamt 6 bis 15 C-Atomen in allen Alkylresten, z. B. Triethylamin bis Triamylamin bzw. Dimethylcyclohexylamin.

Gut geeignete tertiäre Amine sind neben den Trialkylaminen solche Amine, welche insbesondere in β-Stellung zur tertiären Gruppe eine weitere tertiäre Amino- oder eine Ethergruppe aufweisen. Beispiele sind Dialkylaminoalkyl-ether oder Bis-dialkylaminoalkylether (US-PS 3 330 782, DE-B 1 030 558), z. B. Dimethyl-(2-ethoxyethyl)-amin, Diethyl-(2-methoxypropyl)-amin, Bis-(2-dimethylaminoethyl)-ether, Bis-(2-diethylaminoethyl)-ether, Bis-(2-diethylaminoisopropyl)-ether, 1-Ethoxy-2-dimethylaminoethoxyethan, N-Methyl-morpholin, N-Ethyl-morpholin, N-Butyl-morpholin, ferner permethylierte Polyalkylendiamine wie Tetramethyl-ethylendiamin, Tetramethyl-1,2-propylendiamin, Pentamethyldiethylentriamin, Hexamethyltriethylen-tetramin und höhere permethylierte Homologe (DE-A 2 624 527 und -528), ferner Diethylaminoethyl-piperidin, 1,4-Diaza-(2,2,2)-dicyclooctan, N,N'-Dimethylpiperazin, N,N'-Diethylpiperazin, N-

Methyl-N'-dimethylaminoethyl-piperazin, N,N'-bis-dimethylaminoethyl-piperazin, N,N'-Bis-dimethylaminopropylpiperazin und andere, in der DE-A 2 636 787 zitierte Bis-dialkylaminoalkyl-piperazine.

Bevorzugt aus dieser Gruppe sind die wasserlöslichen Verbindungen wie Tetramethylethylendiamin, permethyliertes Diethylentriamin, N-Methylmorpholin, Bis-2-dimethylaminoethyl-ether und N-Methylpiperidin.

Einsetzen lassen sich auch acylierte tertiäre Aminderivate, wie z. B. 1-Dimethylamino-3-formylaminopropan, N-(2-Dimethylaminoethyl)-propionamid, N-(2-Diethylaminoethyl)-benzamid, sowie andere Amidgruppen (vorzugsweise Formamidgruppen) enthaltende tertiäre Amine gemäß DE-A 2 523 633 und 2 732 292.

Von relativ geringer Wirksamkeit sind tertiäre Amine vom Pyridintyp und tertiäre Amine mit mindestens einem, an das N-Atom gebundenem aromatischem Rest, z. B. Dimethylanilin.

Insoweit es sich nicht um wasserlösliche tertiäre Amine handelt, soll ihr Siedepunkt zweckmäßig unter 250 °C, bevorzugt unter 200 °C, liegen.

Wenn nicht vollständig in der Reaktionsmischung homogen lösliche (nur bedingt wasserlösliche) tert.-Amine vorliegen, werden gegebenenfalls die Hilfslösungsmittel d) zur Homogenisierung der Reaktionsmischung mitverwendet.

In dem erfindungsgemäßen Verfahren stellen somit die tertiären Amine c) nicht nur Katalysatoren der Hydrolysereaktion dar, sondern darüber hinaus bei Anwendung in hoher Menge auch « Lösungsmittel » zur (weitgehenden) Homogenisierung der Reaktionsmischung.

Im erfindungsgemäßen Verfahren werden die NCO-Verbindungen a) in der Regel ohne Lösungsmittel d) verwendet. Es können zur Viskositätserniedrigung aber auch Lösungen von NCO-Verbindungen in NCO-inerten Lösungsmitteln, z. B. waserlöslichen Etherverbindungen, z. B. Dioxan, gegebenenfalls sogar in Gegenwart kleinerer Mengen an teil- oder wasserunlöslichen Verbindungen wie Methylethylketon, Propionitril oder Kohlenwasserstoffen oder Halogenkohlenwasserstoffen eingesetzt werden. Ferner können in der angegebenen beschränkten Menge auch Verbindungen wie z. B. Dimethylformamid mit eingesetzt werden. Bei der Hydrolyse-Reaktion sollen im wesentlichen homogene Lösungen vorliegen.

Bevorzugt werden die NCO-Verbindungen jedoch dann als Lösungen in den o. g. Lösungsmitteln verwendet, wenn es sich um feste oder im Bereich von 20 bis 100 °C unschmelzbare, schwer schmelzbare oder zähflüssige NCO-Prepolymere handelt. Werden flüssige NCO-Verbindungen ohne Lösungsmittel im erfindungsgemäßen Verfahren eingesetzt, sollen sie vorteilhafterweise auf von 20 bis 100 °C, bevorzugt von 40 bis 90 °C erwärmt werden, um ihre Viskosität niedrig zu halten. Bei Verwendung von Lösungsmitteln, die bei Normaldruck tiefer sieden als es der Reaktionstemperatur entspricht, muß unter Druck gearbeitet werden.

Als wasserlösliche, wassermischbare Lösungsmittel auf Etherbasis d) werden vorzugsweise Dioxan und Tetrahydrofuran eingesetzt. Es können jedoch auch die Ether des Ethylenglykols oder Propylenglykols verwendet werden.

Die Etherlösungsmittel können in untergeordneten Mengen auch mit wassermischbaren « Co-Lösungsmitteln » (d/1) mit Carbonsäuredialkylamid-, Lactam-, Tetraalkylharnstoff-, Sulfon-, Sulfoxid-, Phosphordialkylamid-, Nitril- und Ketongruppen mit einem Siedebereich von 56 bis 250 °C, vorzugsweise 80 bis 200 °C, und einer Dielektrizitätskonstante von mindestens 10 verdünnt werden. Die eingesetzten Mengen von d/1 liegen bei weniger als 5 Teilen pro 100 Teilen a).

Die geeigneten Lösungsmittel d/1 lassen sich zu folgenden Substanzklassen zusammenfassen :

1. Wasserlösliche, aliphatische oder cycloaliphatische Säureamide mit 1 bis 10 Kohlenstoffatomen, z. B. Dimethylformamid, Diethylformamid, N-Methylpyrrolidon, Dimethylacetamid, Caprolactam, Formamid. Bevorzugt sind Dimethylformamid, Dimethylacetamid und N-Methylpyrrolidon.

2. Wasserlösliche, tetraalkylierte aliphatische Harnstoffe mit 4 bis 12 C-Atomen, z. B. Tetramethylharnstoffe oder Tetraethylharnstoff.

3. Wasserlösliche, aliphatische oder cycloaliphatische Sulfone oder Sulfoxide mit 2 bis 10 Kohlenstoffatomen, z. B. Tetramethylensulfon oder Dimethylsulfoxid.

4. Wasserlösliche, aliphatische oder cycloaliphatische Phosphorsäureamide, z. B. Hexamethylphosphorsäuretriamid.

5. Das wasserlösliche Acetonitril.

6. Das wasserlösliche Keton : Aceton.

Die CO-Lösungsmittel können auch in beliebigen Mischungsverhältnissen zueinander eingesetzt werden. Unter den genannten Lösungsmitteln werden solche bevorzugt, welche bei Normaldruck zwischen 56 und 250 °C sieden, da sich hierbei ihre Aufarbeitung vereinfacht.

Bevorzugte wassermischbare Lösungsmittel sind Dimethylformamid, Dimethylacetamid und N-Methyl-pyrrolidon, Tetramethylensulfon, Acetonitril und Aceton. Technisch ganz besonders geeignet und zugänglich sind Dimethylformamid und Acetonitril. Weniger bevorzugt sind die Zerewitinoff-aktiven Substanzen, wie z. B. Caprolactam oder Formamid, oder gegenüber Aminogruppen nicht völlig unreaktive Substanzen wie z. B. Aceton, obwohl auch durchaus noch akzeptable Produkte erhalten werden.

Eine Mitverwendung von nicht vollständig mit Wasser mischbaren Lösungsmitteln, z. B. Propionitril, Methylethyketon, Ethylacetat oder Kohlenwasserstoffen ist in untergeordneten Mengen möglich, aber nicht bevorzugt.

Für die Mengen (insbesondere die Obergrenzen) an einzusetzenden Lösungsmitteln d) gelten folgende bevorzugte Randbedingungen des Verfahrens :

1. Die Konzentration an NCO-Verbindung a) soll in der Hydrolyse-Reaktionsmischung ≤ 60 Gew.-%, bevorzugt ≤ 40 Gew.-% betragen, d. h. der Anteil an « Lösungsmitteln b) + c) + ggf. d) » beträgt ≥ 40 bzw. ≥ 60 Gew.-%.

2. Die Summe a) + b) + c) + d) soll 100 % betragen.

3. Es muß soviel tert.-Amin c), Wasser b) und gegebenenfalls weiteres Lösungsmittel d) verwendet werden, daß eine im wesentlichen homogene (höchstens schwach trübe) oder vorzugsweise eine homogene klare Lösung bei den Reaktionstemperaturen gebildet wird.

4. Die tertiären Amine c) sollen in Mengen von ≥ 10 Teilen, bezogen auf 100 Teile der NCO-Verbindung a) (als Feststoff gerechnet), vorzugsweise in Mengen von 20 bis 400 Teilen, tert.-Amin eingesetzt werden.

Verwendet man die bevorzugten wasserlöslichen (voll mit Wasser mischbaren) tertiären Amine c), so vermögen diese alleine als homogenisierendes Lösungsmittel für die NCO-Verbindung a) und das Wasser b) zu wirken. Bei diesen wasserlöslichen tertiären Aminen besteht als Obergrenze ihrer Einsatzmenge keine grundsätzliche Beschränkung, es sei denn, die praktisch in den Rahmenbedingungen 1) angegebene Konzentrationsgrenze. Bei den wasserlöslichen tertiären Aminen ist eine Mitverwendung von Hilfslösungsmitteln d) nicht zwingend erforderlich.

Bei Verwendung von nicht voll wassermischbaren tert.-Aminen, wie z. B. Triethylamin, muß zur Erfüllung der Rahmenbedingungen 3) (Homogenisierung der Reaktionsmischung) eine hinreichende Menge an Lösungsmitteln d) mitverwendet werden.

Als Verbindungen e) können auch die aus der Literatur für die Katalyse der Isocyanatchemie bekannten mehrwertigen Metallverbindungen im erfindungsgemäßen Verfahren angewendet werden. Es handelt sich hier bevorzugt um Verbindungen des Zinns, Zinks oder Bleis, beispielsweise seien Dibutylzinndilaurat, Zinnoctoat oder Bleioctoat genannt.

Es können als Verbindungen e) auch Alkalicarbonate oder Hydrogencarbonate, z. B. Natrium- oder Kaliumcarbonat bzw. Natrium- oder Kaliumhydrogencarbonat, vorzugsweise in Form ihrer Komplexe, mit cyclischen oder acyclischen, gegebenenfalls Stickstoff enthaltenden Kronenethern verwendet werden. Beispielsweise seien die in Lösungsmitteln löslichen, die genannten Natrium-, Kaliumcarbonat und -hydrogencarbonat-Komplexe enthaltenden Kronenether-Verbindungen :

(1,13-Bis-8-chinolyl)-1,4,7,10,13-pentaoxatridecan, 4,7,13,18-Tetraoxa-1,10-diazabicyclo-(8,5,5)-eicosan, 4,7,13,16,21-Pentaoxa-1,10-diazabicyclo-(8,8,5)-tricosan,
4,7,13,16,21,24-Hexaoxa-1,10-diazabicyclo-(8,8,8)-hexacosan,
5,6-Benzo-4,7,13,16,21,24-hexaoxa-1,10-diazabicyclo-(8,8,8)-hexacosan,
1,4,7,10,13,16-Hexaoxacyclooctadecan,
2,5,8,11,14,17-Hexaoxaoctadecan
genannt.

Diese Verbindungen sind bekannt und beispielsweise in der Firmenschrift von Merck, Kontakte 1/77, S. 29 ff aufgeführt. Es sind auch beliebige Gemische der beschriebenen Verbindungen katalytischer Aktivität einsetzbar.

Als Cokatalysatoren e) können neben den tertiären Aminen auch die als Katalysatoren bereits bekannten Hydroxide der I., II. und/oder III. Hauptgruppe des Periodensystems der Elemente, z. B. Natriumhydroxid, Kaliumhydroxid, Calziumhydroxid, Na-aluminat, aber auch Verbindungen wie Natriumsilikat (Wasserglas), Natriumsulfid oder Natriumcyanid, vorzugsweise in Mengen von 0,01 bis 1 Gew.-Teile bezogen auf a), eingesetzt werden.

Die genannten Verbindungen katalytischer Aktivität werden im allgemeinen der Lösung aus tert.-Aminen, gegebenenfalls Lösungsmitteln und Wasser zugesetzt. Die Zugabe zur Isocyanatgruppenhaltigen Verbindung ist u. U. möglich, aber nicht bevorzugt.

Die Metallkatalysatoren und Alkalicarbonate kommen im allgemeinen in Mengen von 0,01 bis 1 Gew.-Teile, die Kronenetherkomplexe in Mengen von 0,1 bis 10 Gew.-Teilen, bezogen auf a), zum Einsatz.

Zur Hydrolyse der NCO-Verbindung zu Polyaminen mit hinreichend hoher Aminzahl ist es günstig, eine Konzentration der NCO-Verbindung unter 60 Gew.-% in der Reaktionsmischung aufrechtzuerhalten (vorzugsweise unter 40 Gew.-% a)).

Je größer die Verdünnung bei der Reaktion gewählt wird, um so besser wird der Hydrolyseumsatz, d. h. es werden um so höhere Aminzahlen des Polyamins, d. h. eine um so höhere Konversion der NCO- in die $NH_2$-Gruppen, erhalten. Eine Grenze der Verdünnung ergibt sich praktisch aus der Wirtschaftlichkeit bei der Aufarbeitung ; sie liegt in der Praxis etwa bei 3 %iger Lösung. Wenn der Anteil der Tertiäramine wesentlich erhöht ist (z. B. ≥ 20 Teile), so übernimmt das tertiäre Amin neben den oder anstatt von Lösungsmitteln d) oder Co-Lösungsmitteln eine Art Lösungsmittelfunktion.

Es sind dabei aber mindestens so viele Lösungsmittel mitzuverwenden, daß auch bei Einsatz von nicht vollständig wassermischbaren tertiären Aminen eine weitgehend homogene, vorzugsweise homogene, Reaktionsmischung verbleibt.

In einer weniger bevorzugten Ausführungsform können der Reaktionsmischung auch « H-aktive Gruppen » enthaltende Verbindungen mit 2 oder mehreren Hydroxy-, Amino- und/oder Thiolgruppen beigemischt werden. Diese Verbindungen wurden bereits als Aufbaukomponenten der im erfindungsgemäßen Verfahren einsetzbaren NCO-Verbindungen genannt, besonders bevorzugt sind difunktionelle bis gegebenenfalls tetrafunktionelle Verbindungen des Molekulargewichts 62-2 000, insbesondere solche mit mindestens 2 primären Hydroxygruppen, z. B. Ethandiol, Butandiol, Propandiol-1,2, Polyethylenglykole, Trimethylolpropan oder ähnliche.

Selbsverständlich können auch Verbindungen mit verschiedenen « H-aktiven Gruppen » verwendet werden, z. B. Aminoethanole.

Verbindungen, die nur eine H-aktive Gruppe aufweisen, z. B. Methanol, Ethanol, Cyclohexanol, Cyclohexylamin, Anilin, asymmetrisches Dimethylhydrazin, Dimethylaminopropylamin, können als monofunktionelle Kettenabbrecher in untergeordneten Mengen mitverwendet werden.

Als Nebenreaktion im erfindungsgemäßen Verfahren kann die Vorverlängerung auftreten, d. h. Isocyanat und bereits gebildetes Amin reagieren unter Kettenverknüpfung zu Harnstoffen. Diese Nebenreaktion läßt sich durch Arbeiten in verdünnter Lösung sowie der Verwendung der tertiären Amine weitgehend zurückdrängen. Zwar ist ein möglichst geringes Ausmaß dieser Nebenreaktionen erwünscht, aus ökonomischen Gründen kann aber auch ein gewisser Grad an Vorverlängerung in Kauf genommen werden : Das Werteniveau eines Elastomeren, bei welchem ein nach dem erfindungsgemäßen Verfahren erhaltenes Polyamin verwendet wurde, und bei welchem bei der Herstellung ca. 19 % der NCO-Gruppen mit Aminogruppen in die Vorverlängerungsreaktion unter Harnstoffbildung abreagierten, zeigt keinen wesentlichen Abfall gegenüber einem Produkt mit fast vollständiger Umsetzung, wie das angeführte Vergleichsbeispiel zeigt.

Die erfindungsgemäße Reaktion wird bevorzugt in homogener Phase durchgeführt. Durch ein geringfügiges Überdosieren der Wassermenge oder der Menge der NCO-Verbindung a) kann gegebenenfalls eine leichte Trübung der Reaktionsmischung erhalten werden, da die Ausgangsstoffe nicht mehr vollständig gelöst sind. Eine Durchführung im stark heterogenen Bereich, z. B. durch übermäßige Wasserzugabe unter Ausfällung des NCO-Prepolymers ergibt jedoch unzureichende Produkte.

Durch einige wenige Vorversuche lassen sich die von den Ausgangsverbindungen abhängigen optimalen Mischungsverhältnisse leicht bestimmen.

Die Reaktion kann bei Temperaturen von — 10 bis + 150 °C durchgeführt werden. Bevorzugt wird jedoch bei Temperaturen von 65 bis 130 °C gearbeitet, da hierbei die besten Raum/Zeit-Ausbeuten bei gleichzeitig hoher Löslichkeit erreicht werden. Besonders bevorzugt wird am Siedepunkt des Gemisches gearbeitet, der wegen der Anwesenheit von Wasser zumeist bei ca. 90 bis 105 °C liegt. Unter besonderen Umständen kann es auch notwendig werden, die Reaktion unter Druck durchzuführen, um ausreichend hohe Temperaturen zu erhalten.

Das Einsetzten der Reaktion ist durch die fast spontane Abspaltung von $CO_2$ zu erkennen, die auch bereits bei niedrigen Temperaturen beobachtet wird. Wichtig ist, daß für eine sehr gute und schnelle Durchmischung der Reaktanden gesorgt wird, was durch die Mitverwendung der Lösungsmittel und/oder eines hinreichend großen Überschusses an tertiären Aminen sichergestellt werden muß. In gleicher Richtung wirkt auch die Viskositätsverminderung bei Anwendung der höheren Reaktionstemperaturbereiche. Die Reaktion kann diskontinuierlich oder kontinuierlich durchgeführt werden.

In einer diskontinuierlichen Ausführungsform wird die NCO-Gruppen aufweisende Verbindung a) in die wäßrige tertiäre Amine und gegebenenfalls Katalysatoren sowie gegebenenfalls Lösungsmittel enthaltende Mischung mit den tertiären Aminen eingebracht. Dies kann mittels eines Tropftrichters oder z. B. durch maschinelle Einspritzung mittels einer Düse geschehen, wobei durch intensives Rühren eine möglichst gute Verteilung angestrebt wird.

In einer kontinuierlichen Ausführungsform, die für eine großtechnische Produktion besonders geeignet ist, werden die NCO-Verbindungen a) (gegebenenfalls als Lösung) und die wäßrige Lösung getrennt einem gemeinsamen Reaktionsraum zudosiert, z. B. mittels eines Durchflußmischers intensiv vermischt, so zur Reaktion gebracht und aus dem Mischraum schnell ausgetragen. Die Dosierung kann z. B. über graduierte Tropftrichter oder mittels einer Kolben- und/oder Membrandosierpumpe oder einer anderen maschinellen Dosiervorrichtung vorgenommen werden. Es ist bei der kontinuierlichen Dosierung bevorzugt, beide Komponenten in sehr kurzer Zeit (Sekunden oder Bruchteilen davon) mit einer geeigneten, gegebenenfalls maschinell betriebenen Vorrichtung, zu vermischen, zur Reaktion zu bringen und aus dem Reaktionsraum auszutragen.

Zur Erleichterung der Reaktion der Isocyanatgruppen mit der wäßrigen tertiären Aminphase können verschiedene Zusätze verwendet werden. So können zum Homogenisieren ein oder mehrere handelsübliche Emulgatoren zugesetzt werden, z. B. in Mengen von 0,01 bis 1 Gew.-Teil auf 100 Teile Reaktionsmischung. Bei Verwendung homogener Reaktionsmischungen (gelöste Komponenten) ist dies jedoch nicht notwendig.

Bei den in der kontinuierlichen Ausführungsform geeigneten Durchflußmischern unterscheidet man zwischen den statischen Mischern mit festen Einbauten und dynamischen Mischern mit beweglichen Einbauten nach dem Rotor-Stator-Prinzip. Sie können gegebenenfalls geheizt oder gekühlt werden. Die erforderliche Mischenergie wird bei den statischen Mischern über die Pumpen aufgebracht, während bei den dynamischen Mischern ein separater Motor den Rotor treibt. In allen Fällen hängt der Reaktionsumsatz der Isocyanatgruppen zu Aminogruppen auch von der aufgebrachten Leistung, bzw. den entsprechend erzeugten Scherkräften, d. h. von der möglichst schnellen homogenen Verteilung der NCO-Verbindung im Reaktionsmedium ab.

Beispiel 5

300 g Dioxan, 200 g Triethylamin und 50 ml Wasser wurden bei 90 °C unter heftigem Rühren innerhalb 10 bis 15 Minuten mit 100 g III versetzt. Es wurde anschließend im Wasserstrahlvakuum bis 120 °C Sumpftemperatur eingeengt. Das Polyamin wurde in 93 %iger Ausbeute bei einer Aminzahl von 26 als Rückstand erhalten.

Beispiel 6

211 g Bis-2-dimethylaminoethyl-ether und 50 ml Wasser wurden auf 90 °C erhitzt und unter heftigem Rühren mit 100 g I versetzt. Es wurde 4 Minuten weiter erhitzt, anschließend mit 30 ml Wasser versetzt und abgekühlt. Die beiden Phasen wurden getrennt und destillativ aufgearbeitet (bis 120 °C Sumpftemperatur, 0,1 Torr). Es wurden 82 g Polyamin der Aminzahl 35 erhalten, welches laut gaschromatographischer Untersuchung praktisch frei an monomerem 2,4-Toluylendiamin war.

Aus der wäßrigen Phase wurden 7 g eines dunkelgefärbten Polyamins der Aminzahl 85 erhalten, welches zu ca. 2 % aus 2,4-Toluylendiamin bestand.

Beispiel 7

350 g Tetrahydrofuran, 50 ml Wasser und 50 g Bis-2-dimethylaminoethyl-ether wurden bei 65 °C unter heftigem Rühren mit 100 g III versetzt und dann wie bei Beispiel 5 aufgearbeitet. Die Aminzahl des Polyamins betrug 28.

Beispiel 8

550 g Tetrahydrofuran, 200 ml Triethylamin, 5 ml Bis-2-dimethylaminoethyl-ether und 50 ml Wasser wurden wie in Beispiel 5 mit 100 g III versetzt und aufgearbeitet. Die Aminzahl des Polyamins betrug 30.

Beispiel 9

100 Teile eines einen NCO-Gehalt von 6,6 % aufweisenden NCO-Prepolymeren, das aus einem aus 50 % 2,4'-Diisocyanatodiphenylmethan und 50 % 4,4'-Diisocyanatodiphenylmethan bestehenden Gemisch und einem linearen Polypropylenglykolether der durchschnittlichen Molmasse 1 600 hergestellt wurde, werden bei 70 °C mit einem Vernetzergemisch, bestehend aus 85 Teilen eines Aminopolyethers (Aminzahl 28), hergestellt nach dem erfindungsgemäßen Verfahren aus einem NCO-Prepolymer aus 2,4-Toluylendiisocyanat und einem eine durchschnittliche Molmasse von 2 000 aufweisenden linearen Polypropylenglykolethers und 10 Teile Diethyl-tolamin (65/35-Gemisch von 1,3-Diamino-2,4-diethyl-6-methyl-benzol und 1,3-Diamino-2-methyl-4,6-diethyl-benzol ; « DETA ») umgesetzt.

Daten in Tabelle 3.

Beispiel 10

Alle Komponenten und Randbedingungen entsprechen Beispiel 9, jedoch beträgt die Aminzahl des Aminopolyols 43.

Daten in Tabelle 3.

(Siehe Tabelle Seite 15 f.)

2 550 862 genannt. Dort finden sich auch Hinweise auf bei der Polyurethanherstellung gegebenenfalls mitzuverwendenden Hilfs- und Zusatzstoffe. Die Herstellung von Polyurethan (harnstoff)en mittels der erfindungsgemäß hergestellten Polyamine ist ebenfalls Gegenstand der vorliegenden Erfindung. Ihre Anwendung kann z. B. für Elastomere, Beschichtungen, Fäden in der Applikation aus Schmelzen, Lösungen, Dispersionen oder als Reaktivkomponentenmischung erfolgen. Weitere Verwendungszwecke der erfindungsgemäß hergestellten Polyamine sind z. B. Kupplungskomponenten für Diazofarbstoffe, Härter für Epoxid und Phenolharze, sowie alle anderen an sich bekannten Reaktionen von Aminen wie Amid- oder Imidbildung und andere.

Die folgenden Beispiele dienen der Erläuterung des erfindungsgemäßen Verfahrens. Wenn nicht anders vermerkt, sind Mengenangaben als Gewichtsteile bzw. Gewichtsprozente zu verstehen.

Für die Beispiele bzw. Vergleichsbeispiele wurden folgende Isocyanatgruppen aufweisende Verbindungen eingesetzt.

I. Prepolymer mit einem NCO-Gehalt von 3,5 %, hergestellt aus 2,4-Toluylendiisocyanat und einem Polypropylenglykolether der durchschnittlichen Molmasse 2 000 ; f = 2.

Ia. Prepolymer I gedünnschichtet.

II. Prepolymer mit einem NCO-Gehalt von 3,5 %, hergestellt aus einem Gemisch von 80 % 2,4-Toluylendiisocyanat und 20 % 2,6-Toluylendiisocyanat und einem Polypropylenglykolether der durchschnittlichen Molmasse 2 000 ; f = 2.

III. Prepolymer mit einem NCO-Gehalt von 3,5 %, hergestellt aus 2,4-Toluylendiisocyanat und einem auf Propylenglykol gestarteten PO/EO-Mischpolyetherpolyol der durchschnittlichen Molmasse 2 000 ; f = 2 ; EO-Anteil = 20 Gew.-%.

IV. Prepolymer mit einem NCO-Gehalt von 4,5 %, hergestellt aus einem Gemisch von 80 % 2,4-Toluylendiisocyanat und 20 % 2,6-Toluylendiisocyanat und ein Polypropylenglykolether der durchschnittlichen Molmasse 1 500 ; f = 2.

V. Prepolymer mit einem NCO-Gehalt von 3,3 %, hergestellt aus einem Gemisch von 50 % 2,4'-Diisocyanatodiphenylmethan und 50 % 4,4'-Diisocyanatodiphenylmethan und einem auf Propylenglykol gestarteten PO/EO-Mischpolyetherpolyol der durchschnittlichen Molmasse 2 000 ; f = 2 ; EO-Anteil = 20 Gew.-%.

VI. Gedünnschichtetes Prepolymer mit einem NCO-Gehalt von 2,1 %, hergestellt aus 2,4-Toluylendiisocyanat und einem auf Trimethylolpropan gestarteten PO-Polyether der durchschnittlichen Molmasse 6 000 ; f = 3 ; EO-Anteil = 13 Gew.-%.

VII. Prepolymer mit einem NCO-Gehalt von 2,8 %, hergestellt aus 2,4-Toluylendiisocyanat und einem Polypropylenglykolether der durchschnittlichen Molmasse 1 500 ; f = 2.

VIII. Prepolymer mit einem NCO-Gehalt von 3,5 %, hergestellt aus 2,4-Toluylendiisocyanat und einem Polytetrahydrofuran der durchschnittlichen Molmasse 2 000 ; f = 2.

IX. Gedünnschichtetes Prepolymer mit einem NCO-Gehalt von 3,3 %, hergestellt aus einem Gemäsch von 65 % 2,4-Toluylendiisocyanat und 35 % 2,6-Toluylendiisocyanat und einem Polyester der durchschnittlichen Molmasse 2 000, der aus Butandiol/Ethylenglykol (50/50) und Adipinsäure aufgebaut ist ; f = 2.

f = Funktionalität ; PO = Propylenoxid ; EO = Ethylenoxid

Vergleichsbeispiele :

a) 100 g I wurde unter heftigstem Rühren zu einer Lösung aus 1 000 g Wasser und 10 ml Bis-2-dimethyl-aminodiethylether gegeben. Nach einer halben Stunde wurde eine zähe, völlig inhomogene, trübe Masse erhalten, die für eine evtl. Weiterverarbeitung völlig unbrauchbar war.

b) Zu 300 g Essigsäureethylester und 50 g Wasser wurden unter heftigem Rühren bei 65 °C innerhalb 15 Minuten 100 g I gegeben. Es wurde noch 1 Stunde bei 65 °C nachgerührt und anschließend im Wasserstrahlvakuum bei 120 °C Sumpftemperatur destillativ aufgearbeitet. Es wurde eine nicht mehr rührbare, gummiartige, trübe Masse erhalten, welche nur eine Aminzahl von 5,6 (mg KOH/g) aufwies (berechnete Aminzahl 46,7 ; $NCO/NH_2$-Umwandlung = 5,6/46,7 = 12 % der Theorie).

c) Zu 300 g Dioxan und 50 g Wasser wurden unter heftigem Rühren bei 90 °C 100 g I innerhalb 15 Minuten zugegeben. Die klare Lösung wurde noch 1 Stunde bei 85 °C gehalten und anschließend das Dioxan und Wasser im Wasserstrahlvakuum bis 120 °C Sumpftemperatur abdestilliert. Es wurde eine schwach trübe, bei 100 °C gerade noch fließfähige Masse erhalten, die bei Raumtemperatur eine fast gummiartige Konsistenz annahm. Die Aminzahl betrug 13,6 (mg KOH/g) (berechnete Aminzahl : 47,7 ; $NCO/NH_2$-Umwandlung = 13,6/46,7 = 29 % der Theorie).

Die Bestimmung der Aminzahl wurde nach der in Houben-Weyl, Methoden der organischen Chemie, Band II (1953), Seiten 660/61 beschriebenen Methode zur Bestimmung von Aminen durch Titration in Eisessig mit Perchlorsäure durchgeführt. Durch Acetylierung des primären Amins und anschließende Titration des tertiären Amins mit Perchlorsäure läßt sich einfach zwischen der evtl. verbleibenden Restmenge an Katalysator (tert. Amin) und der Aminzahl (prim. Amin) unterscheiden.

Beispiel 1

250 ml Bis-2-dimethylaminoethyl-ether und 50 ml Wasser wurden auf 90 °C erhitzt und unter

heftigem Rühren innerhalb 10 bis 15 Minuten mit 100 g I versetzt und anschließend im Wasserstrahlvakuum bis 120 °C Sumpftemperatur destilliert, wobei das Polyamin mit einer Aminzahl von 38 (mg KOH/g) zurückblieb. Die Ausbeute betrug über 95 % der Theorie.

### Beispiele 2a-1

Die in der Tabelle 1 aufgelisteten Beispiele 2a-1 sind nach der im Beispiel 1 beschriebenen Vorschrift durchgeführt. Die Mengenverhältnisse sind nicht optimiert.

Tabelle 1

| Beispiel | g Prepolymer | Einsatzmengen ml Bis-2-dimethyl-aminoethyl-ether | g Wasser | Aminzahl (mg KOH/g) |
|---|---|---|---|---|
| 2a | 100 I | 250 | 24 | 36 |
| 2b | 100 Ia | 250 | 50 | 40 |
| 2c | 100 II | 250 | 50 | 37 |
| 2d | 100 III | 250 | 50 | 36 |
| 2e | 75 IV | 250 | 50 | 37 |
| 2f | 400 III | 800 | 400 | 42 |
| 2g | 50 V | 250 | 50 | 31 |
| 2h | 100 VI | 250 | 50 | 14 |
| 2i | 100 VII | 250 | 50 | 14 |
| 2k | 100 VIII | 250 | 50 | 32 |
| 2l | 100 IX | 250 | 50 | 34 |

### Beispiele 3a-e

Die in der Tabelle 2 aufgeführten Beispiele 3a-e wurden analog der für das Beispiel 1 gegebenen Vorschrift durchgeführt, jedoch wurden andere tertiäre Amine verwendet.

Die Mengenverhältnisse sind nicht optimiert.

Tabelle 2

| Beisp.-Nr. | g Prep. | Einsatzmengen ml tert. Amin | g Wasser | Aminzahl |
|---|---|---|---|---|
| 3a | 100 I | 250 Bis-2-dimethyl-aminoethyl-ether + 1 g Dabco | 50 | 40 |
| 3b | 100 III | 350 Tetramethylethylendiamin, 69 %ige wäßrige Lösung | - | 41 |
| 3c | 100 III | 700 " | - | 42 |
| 3d | 100 III | 210 Bis-2-dimethylamino-ethyl-methylamin | 100 | 31 |
| 3e | 100 III | 420 N-Methylmorpholin | 100 | 29 |

### Beispiel 4

500 ml Bis-2-dimethylaminoethyl-ether und 50 ml Wasser wurden bei 5 °C unter heftigem Rühren innerhalb 10 bis 15 Minuten mit 100 g I versetzt und anschließend zur Destillation im Wasserstrahlvakuum aufgeheizt und bis zu einer Sumpftemperatur von 120 °C eingeengt. Es wurde das Polyamin in 97 %iger Ausbeute bei einer Aminzahl von 35 als Rückstand erhalten.

## Beispiel 5

300 g Dioxan, 200 g Triethylamin und 50 ml Wasser wurden bei 90 °C unter heftigem Rühren innerhalb 10 bis 15 Minuten mit 100 g III versetzt. Es wurde anschließend im Wasserstrahlvakuum bis 120 °C Sumpftemperatur eingeengt. Das Polyamin wurde in 93 %iger Ausbeute bei einer Aminzahl von 26 als Rückstand erhalten.

## Beispiel 6

211 g Bis-2-dimethylaminoethyl-ether und 50 ml Wasser wurden auf 90 °C erhitzt und unter heftigem Rühren mit 100 g I versetzt. Es wurde 4 Minuten weiter erhitzt, anschließend mit 30 ml Wasser versetzt und abgekühlt. Die beiden Phasen wurden getrennt und destillativ aufgearbeitet (bis 120 °C Sumpftemperatur, 0,1 Torr). Es wurden 82 g Polyamin der Aminzahl 35 erhalten, welches laut gaschromatographischer Untersuchung praktisch frei an monomerem 2,4-Toluylendiamin war.

Aus der wäßrigen Phase wurden 7 g eines dunkelgefärbten Polyamins der Aminzahl 85 erhalten, welches zu ca. 2 % aus 2,4-Toluylendiamin bestand.

## Beispiel 7

350 g Tetrahydrofuran, 50 ml Wasser und 50 g Bis-2-dimethylaminoethyl-ether wurden bei 65 °C unter heftigem Rühren mit 100 g III versetzt und dann wie bei Beispiel 5 aufgearbeitet. Die Aminzahl des Polyamins betrug 28.

## Beispiel 8

550 g Tetrahydrofuran, 200 ml Triethylamin, 5 ml Bis-2-dimethylaminoethyl-ether und 50 ml Wasser wurden wie in Beispiel 5 mit 100 g III versetzt und aufgearbeitet. Die Aminzahl des Polyamins betrug 30.

## Beispiel 9

100 Teile eines einen NCO-Gehalt von 6,6 % aufweisenden NCO-Prepolymeren, das aus einem aus 50 % 2,4'-Diisocyanatodiphenylmethan und 50 % 4,4'-Diisocyanatodiphenylmethan bestehenden Gemisch und einem linearen Polypropylenglykolether der durchschnittlichen Molmasse 1 600 hergestellt wurde, werden bei 70 °C mit einem Vernetzergemisch, bestehend aus 85 Teilen eines Aminopolyethers (Aminzahl 28), hergestellt nach dem erfindungsgemäßen Verfahren aus einem NCO-Prepolymer aus 2,4-Toluylendiisocyanat und einem eine durchschnittliche Molmasse von 2 000 aufweisenden linearen Polypropylenglykolethers und 10 Teile Diethyl-tolamin (65/35-Gemisch von 1,3-Diamino-2,4-diethyl-6-methyl-benzol und 1,3-Diamino-2-methyl-4,6-diethyl-benzol ; « DETA ») umgesetzt.

Daten in Tabelle 3.

## Beispiel 10

Alle Komponenten und Randbedingungen entsprechen Beispiel 9, jedoch beträgt die Aminzahl des Aminopolyols 43.

Daten in Tabelle 3.

(Siehe Tabelle Seite 15 f.)

| | Beispiel 9 | Beispiel 10 |
|---|---|---|
| Kettenverlängerer | | |
| Aminopolyether | 85 Gwt. | 85 |
| (NH-Zahl) | (28) | (43) |
| Diethyl-tolamin; "DETA" | 10 Gwt. | 10 |
| NCO-Prepolymer (6,6 % NCO) | 100 Gwt. | 100 |
| Kennzahl | 110 | 110 |
| Vermischungsverh. (NCO-Prepolymer-Kettenverlängerergemisch) | 100:87,7 Gwt. | 100:76,5 |
| Zugversuch DIN 53504 $\sigma_{100}$ MPa | 3,5 | 4,0 |
| $\sigma_{300}$ MPa | 6,4 | 7,2 |
| $\sigma_{500}$ MPa | 3,7 | 11,5 |
| $\sigma_{Bruch}$ MPa | 23,0 | 28,0 |
| Bruchdehnung % | 730 | 620 |
| Weiterreißversuch DIN 53515; KN/m | 24,5 | 25,5 |
| Shore-Härte DIN 53505; A | 70 | 72 |
| Elastizität DIN 53512; % | 42 | 41 |
| Druckverformungsrest DIN 53512 (24h-70 °C) % | 35 | 32 |
| Abrieb DIN 53516; $mm^3$ | 101 | 93 |
| Gießzeit (sec) | 9 | 10 |
| Knickzeit (min) | sofort knickfest | sofort knickfest |

## Patentansprüche

1. Verfahren zur Herstellung von aromatischen primären Polyaminen durch basische Hydrolyse von aromatisch gebundene NCO-Gruppen aufweisenden Verbindungen, dadurch gekennzeichnet, daß man in einem Einstufenverfahren

a) aromatisch gebundene NCO-Gruppen aufweisende NCO-Verbindungen mit einem Gehalt von 0,5 bis 40 Gew.-% NCO,

b) mit überschüssigen Mengen an Wasser, welche mindestens die 2-fache stöchiometrisch notwendige Menge Wasser darstellt,

c) in Gegenwart von aliphatischen oder cycloaliphatischen oder araliphatischen tertiären Aminen, gegebenenfalls

d) in NCO-inerten, wasserlöslichen Lösungsmitteln der Etherreihe und gegebenenfalls

e) Cokatalysatoren aus der Reihe der Metallkatalysatoren ; der Hydroxide der I., II. und/oder III. Hauptgruppe des Periodensystems ; der Alkali-Silikate ; der Alkalicarbonate oder Alkalihydrogencarbonate und/oder der Alkali- und Erdalkalisalze von Mono- und Polycarbonsäuren,

in einem Temperaturbereich von — 10 bis + 150 °C in einer im wesentlichen homogenen Reaktionsmischung zu Polyaminen hydrolysiert.

2. Verfahren nach Anspruch 1, dadurch gekennzeichnet, daß man als NCO-Verbindungen a) mit einem NCO-Gehalt von 1,2 bis 25 Gew.-% mehrwertige NCO-Voraddukte von Polyisocyanaten an höhermolekulare Polyhydroxylverbindungen aus der Reihe Polyether, Polycarbonate, Polyester, Polylactone, Polyacetale, Polythioether, Polysiloxane oder Polybutadiene mit Molekulargewichten von 400 bis 12 000 und/oder an H-aktive Gruppen tragenden Kettenverlängerungsmitteln des Molekulargewichts 18 bis 399 verwendet und die NCO-Verbindungen in einer Konzentration von $\leqslant$ 60 % in der Reaktionsmischung einsetzt.

3. Verfahren nach Ansprüchen 1 und 2, dadurch gekennzeichnet, daß als tertiäre Amine aliphatische und/oder cycloaliphatische und/oder araliphatische tertiäre Amine zur Anwendung kommen.

4. Verfahren nach Ansprüchen 1 bis 3, dadurch gekennzeichnet, daß die verwendeten tertiären Amine wasserlöslich sind.

5. Verfahren nach Ansprüchen 1 bis 4, dadurch gekennzeichnet, daß als tertiäre Amine Trialkylamine mit 2 bis 10 Kohlenstoffatomen in der Alkylgruppe und wassermischbare Lösungsmittel der Etherreihe, gegebenenfalls in Zumischung weiterer Lösungsmittel, in solchen Mengen verwendet, daß eine im wesentlichen homogene Reaktionsmischung entsteht.

6. Verfahren nach Ansprüchen 1 bis 5, dadurch gekennzeichnet, daß man die Hydrolysenreaktion in Gegenwart von mindestens der 5-fach stöchiometrisch notwendigen Menge Wasser vornimmt.

7. Verfahren nach Ansprüchen 1 bis 6, dadurch gekennzeichnet, daß man die Hydrolysenreaktion bei Temperaturen zwischen 65 und 130 °C und Konzentrationen von $\leqslant$ 60 Gew.-% a) in der Reaktionsmischung vornimmt.

8. Verfahren nach Ansprüchen 1 bis 7, dadurch gekennzeichnet, daß die Reaktion unter Mitverwendung mindestens einer, zwei oder mehrere an aliphatische, cycloaliphatische oder aromatische Reste gebundene Hydroxy- und/oder Amino- und/oder Thiolgruppen aufweisenden Verbindungen neben Wasser durchgeführt wird.

9. Polyamine mit einem Gehalt an 0,19 bis 20,3 Gew.-% an aromatisch gebundenen $NH_2$-Gruppen, hergestellt durch Hydrolyse von NCO-Verbindungen nach Ansprüchen 1 bis 8.

10. Verwendung der Polyamine nach Anspruch 9 als Reaktionskomponente bei der Umsetzung mit Polyisocyanaten und/oder blockierten Polyisocyanaten zu Polyurethanen.

## Claims

1. A process for the production of aromatic primary polyamines by the basic hydrolysis of compounds containing aromatically bound NCO-groups, characterized in that, in a single-stage process,

a) NCO-compounds containing aromatically bound NCO-groups (NCO-content 0.5 to 40 % by weight), are hydrolyzed

b) with excess quantities of water amounting to at least twice the stoichiometrically necessary quantity of water,

c) in the presence of aliphatic or cycloaliphatic or araliphatic tertiary amines, optionally

d) in NCO-inert, water-soluble solvents of the ether series and, optionally,

e) co-catalysts from the series of metal catalysts ; hydroxides of the Ist, IInd and/or IIIrd Main Group of the Periodic System ; alkali silicates ; alkali carbonates or alkali hydrogen carbonates and/or alkali and alkaline earth metal salts of mono- and poly-carboxylic acids,

at a temperature in the range from — 10 to + 150 °C in a substantially homogeneous reaction mixture to form polyamines.

2. A process as claimed in Claim 1, characterized in that polyfunctional NCO-preadducts of polyisocyanates with relatively high molecular weight polyhydroxyl compounds from the series of polyethers, polycarbonates, polyesters, polylactones, polyacetals, polythioethers, polysiloxanes or polybutadienes having molecular weights of from 400 to 12,000 and/or with chain-extending agents containing H-active groups and having a molecular weight of from 18 to 399 are used as the NCO-compounds a) have an NCO-content of from 1.2 to 25 % by weight, and in that the NCO-compounds are used in a concentration of $\leqslant$ 60 % in the reaction mixture.

3. A process as claimed in Claim 1 and 2, characterized in that aliphatic and/or cycloaliphatic and/or araliphatic tertiary amines are used as the tertiary amines.

4. A process as claimed in Claims 1 to 3, characterized in that the tertiary amines used are soluble in water.

5. A process as claimed in Claims 1 to 4, characterized in that the tertiary amines used are trialkyl amines containing from 2 to 10 carbon atoms in the alkyl group and in that water-miscible solvents of the ether series, optionally in admixture with other solvents, are used in such quantities that a substantially homogeneous reaction mixture is formed.

6. A process as claimed in Claims 1 to 5, characterized in that the hydrolysis reaction is carried out in the presence of at least 5 times the stoichiometrically necessary quantity of water.

7. A process as claimed in Claims 1 to 6, characterized in that the hydrolysis reaction is carried out at temperatures in the range from 65 to 130 °C with concentrations of $\leqslant$ 60 % by weight of a) in the reaction mixture.

8. A process as claimed in Claims 1 to 7, characterized in that the reaction is carried out using — in

addition to water — compounds containing at least one, two or more hydroxy and/or amino and/or thiol groups attached to aliphatic, cycloaliphatic or aromatic radicals.

9. Polyamines containing from 0.19 to 20.3 % by weight of aromatically bound $NH_2$-groups, produced by the hydrolysis of NCO-compounds in accordance with Claims 1 to 8.

10. The use of the polyamines claimed in Claim 9 as a reaction component in the reaction with polyisocyanates and/or blocked polyisocyanates to form polyurethanes.

**Revendications**

1. Procédé pour produire des polyamines aromatiques primaires par hydrolyse basique de composés présentant des groupes NCO à liaison aromatique, caractérisé en ce qu'on hydrolyse en un procédé en une étape, dans un intervalle de température de —10 à +150 °C dans un mélange réactionnel essentiellement homogène :

a) des composés présentant des groupes NCO à liaison aromatique, ayant une teneur de 0,5 à 40 % en poids de NCO,

b) avec des quantités excédentaires d'eau, qui représentent au moins 2 fois la quantité d'eau stœchiométriquement nécessaire,

c) en présence d'amines tertiaires aliphatiques ou cycloaliphatiques ou araliphatiques, éventuellement

d) dans des solvants hydrosolubles de la série des éthers, inertes à l'égard de NCO, et éventuellement

e) en présence de cocatalyseurs de la série des catalyseurs métalliques, des hydroxydes des éléments des groupes principaux I, II et/ou III de la Classification Périodique ; des silicates alcalins ; des carbonates alcalins ou hydrogénocarbonates alcalins et/ou des sels alcalins et alcalino-terreux d'acides mono- et polycarboxyliques,

pour obtenir des polyamines.

2. Procédé selon la revendication 1, caractérisé en ce qu'on utilise comme composés a) contenant des groupes NCO, des produits, ayant une teneur en NCO de 1,2 à 25 % en poids, d'addition préliminaire de polyisocyanates sur des composés polyhydroxylés à poids moléculaire élevé de la série des polyéthers, des polycarbonates, des polyesters, des polylactones, des polyacétals, des polythioéthers, des polysiloxanes ou des polybutadiènes ayant des poids moléculaires de 400 à 12 000 et/ou des agents d'allongement de chaînes, portant des groupes à hydrogène actif, d'un poids moléculaire de 18 à 399, et l'on introduit dans le mélange réactionnel, en une concentration $\leq$ 60 %, les composés contenant les groupes NCO.

3. Procédé selon les revendications 1 et 2, caractérisé en ce qu'on utilise comme amines tertiaires des amines tertiaires aliphatiques et/ou cycloaliphatiques et/ou araliphatiques.

4. Procédé selon les revendications 1 à 3, caractérisé en ce que les amines tertiaires utilisées sont hydrosolubles.

5. Procédé selon les revendications 1 à 4, caractérisé en ce qu'on utilise comme amines tertiaires des trialkylamines ayant 2 à 10 atomes de carbone dans le groupe alkyle et des solvants miscibles à l'eau, de la série des éthers, éventuellement en mélange avec d'autres solvants, en des quantités telles qu'il en résulte un mélange réactionnel essentiellement homogène.

6. Procédé selon les revendications 1 à 5, caractérisé en ce qu'on effectue la réaction d'hydrolyse en présence d'au moins 5 fois la quantité stœchiométriquement nécessaire d'eau.

7. Procédé selon les revendications 1 à 6, caractérisé en ce qu'on effectue la réaction d'hydrolyse à des températures comprises entre 65 et 130 °C et à des concentrations $\leqslant$ 60 % en poids de a) dans le mélange réactionnel.

8. Procédé selon les revendications 1 à 7, caractérisé en ce qu'on effectue la réaction en utilisant en plus de l'eau des composés présentant au moins un, deux ou plusieurs groupes hydroxyles et/ou amino et/ou thiols fixés à des restes aliphatiques, cycloaliphatiques ou aromatiques.

9. Polyamines ayant une teneur de 0,19 à 20,3 % en poids de groupes $NH_2$ à liaison aromatique, produites par hydrolyse de composés contenant des groupes NCO selon les revendications 1 à 8.

10. Utilisation des polyamines selon la revendication 9, comme composants mis en réaction avec des polyisocyanates et/ou des polyisocyanates bloqués pour obtenir des polyuréthannes.